# EUROPÄISCHE PATENTSCHRIFT

(11) **EP 2 824 492 B1**
(45) Veröffentlichungstag und Bekanntmachung des Hinweises auf die Patenterteilung: **09.12.2015**
(21) Anmeldenummer: 13176261.9
(22) Anmeldetag: 12.07.2013
(51) Int. Cl.: G02B 7/06, G02B 7/12, G02B 23/18

(54) **Binokulares Fernglas mit Knickbrücke**
Binoculars with open bridge design
Jumelles binoculaires avec pont coudé

(43) Veröffentlichungstag der Anmeldung: 14.01.2015
(73) Patentinhaber: Carl Zeiss Sports Optics GmbH, 35576 Wetzlar (DE)
(72) Erfinder: Schmitt, Christoph, 35444 Biebertal (DE)
(74) Vertreter: Blumbach Zinngrebe

(56) Entgegenhaltungen:
- EP-A2- 0 152 056
- US-A- 4 262 990
- US-A- 4 396 257

## Beschreibung

### Gebiet der Erfindung

Die Erfindung betrifft ein binokulares Fernglas mit Knickbrücke zur Anpassung des Okularabstandes an die Augenweite des Benutzers im Allgemeinen und ein solches binokulares Fernglas mit einem Mitteltrieb zu Fokussierung im Besonderen.

### Hintergrund der Erfindung

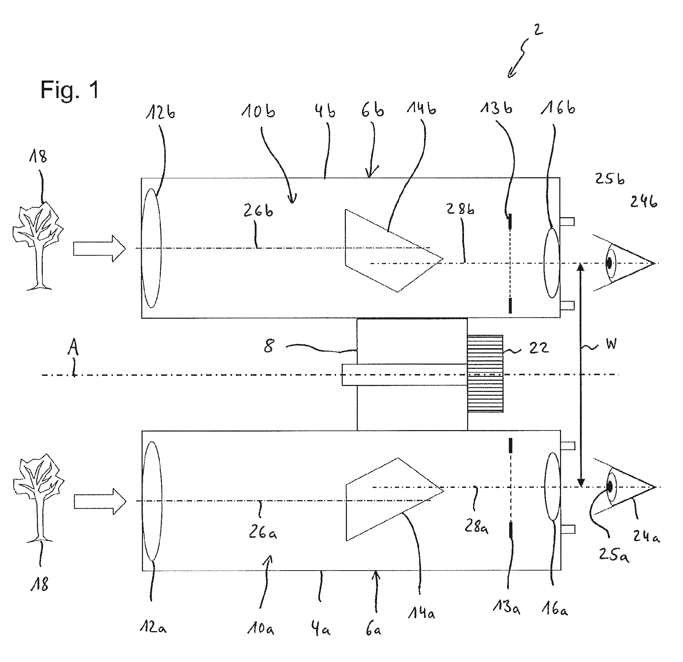

Fig. 1 zeigt schematisch den allgemeinen Aufbau eines binokularen Fernglases 2. Dieses besteht aus zwei parallel zueinander angeordneten Gehäusehälften oder Tuben 4a, 4b, die jeweils ein optisches System enthalten, so dass ein linkes und rechtes Fernrohr 6a, 6b gebildet werden und einer die beiden Gehäusehälften verbindenden Brücke 8.

Das jeweilige optische System 10a, 10b besteht aus mindestens einem Objektiv 12a, 12b, einem Prismensystem 14a, 14b und einem Okular 16a, 16b. Durch das Objektiv und durch das Okular wird jeweils eine optische Achse festgelegt.

Das Objektiv 12a, 12b kann aus mehreren einzelnen Linsen oder Kittgliedern bestehen.

Zur Fokussierung eines durch das binokulare Fernglas 2 betrachteten Objekts 18 wird jeweils zumindest ein optisches Element des linken und rechten Fernrohres 6a, 6b axial verschoben. Hierzu wird z.B. das Okular 16a, 16b, das komplette Objektiv 12a, 12b oder eine Linse oder Linsengruppe, die Bestandteil des Objektivs sein kann, axial verschoben. Letztere Linse oder Linsengruppe ist typischerweise zwischen den feststehenden Objektivlinsen und dem Prismensystem 14a, 14b angeordnet und wird typischerweise als Fokussierlinse bezeichnet. Zum Fokussieren ist bei einer bestimmten Bauart ein Drehknopf 22 auf einer Mittelachse A angeordnet, mit dem eine synchrone axiale Verschiebung der linken und rechten Fokussierlinse angetrieben wird. Diese Anordnung wird auch als Mitteltrieb bezeichnet.

Das Objektiv 12a, 12b kann ein reales, relativ zum betrachteten Objekt 18 auf dem Kopf stehendes Bild in einer dem Objektiv 12a, 12b zugeordneten Bildebene erzeugen. Zum Zwecke der Bildaufrichtung kann das Prismensystem 14a, 14b z.B. nach Abbe-König, Schmidt-Pechan, Uppendahl, Porro oder einer anderen Prismensystem-Variante aufgebaut sein. Durch das Prismensystem 14a, 14b wird das auf dem Kopf stehende Bild wieder aufgerichtet und in einer neuen Bildebene, der Zwischenbildebene abgebildet.

In der Zwischenbildebene kann sich eine das Sehfeld scharf begrenzende Feldblende 13a, 13b befinden.

Das Okular 16a, 16b kann dazu benutzt werden, das Bild der Zwischenbildebene in eine beliebige Entfernung, z.B. ins Unendliche oder in einem Meter scheinbare Entfernung, abzubilden.

Eine Strahlrichtung wird typischerweise durch die Reihenfolge Objekt 18 - Objektiv 12a, 12b - Prismensystem 14a, 14b - Okular 16a, 16b - Auge 24a, 24b definiert.

Die optische Achse 26a, 26b des Objektivs kann durch einen Strahlversatz aufgrund des Prismensystems 14a, 14b zur optischen Achse 28a, 28b des Okulars 16a, 16b einen lateralen Versatz aufweisen.

Um den lateralen Okularabstand an die individuelle Distanz der Augenpupillen 25a, 25b des Benutzers, die sogenannte Augenweite W, anzupassen, kann die Brücke 8 des binokularen Fernglases 2 als eine sogenannte Knickbrücke 8 ausgebildet sein. Bei einem binokularen Fernglas 2 mit Knickbrücke 8 sind die beiden Gehäusehälften 4a, 4b und damit das gesamte in der linken bzw. rechten Gehäusehälfte angeordnete optische System 10a, 10b, einschließlich aller optischen Elemente 12a, 14a, 16a, 12b, 14b, 16b des linken und rechten Fernrohres 6a, 6b über ein Gelenk 30 der Knickbrücke 8 schwenkbar zueinander. Somit wird mittels der Schwenkbewegung der beiden Gehäusehälften 4a, 4b durch den Benutzer der Okularabstand an die individuelle Augenweite W angepasst. Ein typisches Intervall für die Verstellung des Okularabstandes kann im Bereich von etwa 55 mm bis 75 mm liegen.

Die Aperturblende kann entweder durch eine Fassung eines optischen Elements gebildet werden oder durch eine separate Blende definiert sein. Sie kann durch das in Strahlrichtung nachfolgende restliche optische System in eine Ebene abgebildet werden, die in Strahlrichtung hinter dem Okular liegt und typischerweise 5 bis 25 mm Abstand zu diesem hat. Diese Ebene wird typischerweise als Ebene der Austrittspupille bezeichnet.

Eine unterschiedliche Fehlsichtigkeit der beiden Augen des Benutzers kann mittels eines Dioptrienausgleichs berücksichtigt werden. Dazu können z.B. die relativen axialen Positionen der Fokussierlinsen der beiden Fernrohre 6a, 6b relativ zueinander vom Benutzer verstellbar sein. Eine andere Möglichkeit besteht darin, die axialen Positionen der beiden Okulare 16a, 16b relativ zueinander verändern zu können, z.B. durch Verstellung nur eines der beiden Okulare.

Zum Schutz des Benutzers vor seitlichen einfallendem Licht können an der Okularen 16a, 16b ausziehbare, ausdrehbare oder umklappbare Augenmuscheln vorgesehen sein.

Ein binokulares Fernglas 2 kann darüber hinaus weitere optische Komponenten enthalten, die z.B. einer Bildstabilisierung, einer Strahleinkopplung oder Strahlauskopplung oder fotografischen Zwecken dienen. Ebenso können elektronische Komponenten, Bedienelemente oder Energiespeicher vorhanden sein, die für die genannten Zwecke nötig sind (nicht dargestellt).

Meistens seitlich am binokularen Fernglas 2 können sich Haltevorrichtungen befinden, an denen z.B. ein Gurt zum Tragen befestigt werden kann (nicht dargestellt).

Bei einem binokularen Fernglas mit Mitteltrieb und Dioptrienausgleich an einem der beiden Okulare stellt der Benutzer üblicherweise nur einmal am Anfang den Dioptrienausgleich ein, um die relative Fokussierung beider Fernrohre 6a, 6b an die relative Brechkraft seiner beiden Augen 24a, 24b anzupassen. Danach kann der Benutzer dann mit dem hier als Drehknopf 22 ausgebildeten zentralen Fokussierantriebselements beide Fernrohre 6a, 6b synchron auf die wechselnde Entfernung von zu beobachtenden Objekten 18 fokussieren. Der Antrieb der Fokussierung gehört bei einem binokularen Fernglas 2 mit Knickbrücke 8 zu den kritischen Teilen. Es sollte insbesondere dafür Sorge getragen werden, dass sich der Dioptrienausgleich bei der Benutzung, insbesondere beim Schwenken oder "Knicken" der Knickbrücke 8 nicht ungewollt verstellt.

Ein binokulares Fernglas mit einem Fokussierantrieb welcher diese Anforderung erfüllt, ist in der EP 0 152 056 beschrieben. Hier treibt ein objektivseitiger Einstellknopf eine zentrale Mitnehmerscheibe an, welche in einem Führungsstift geradegeführt ist. In die Mitnehmerscheibe sind zwei Schubstangen eingehängt, welche in die Objektivfassung eingreifen.

Obzwar solche Fokussierantriebe die gestellten Anforderungen typischerweise erfüllen, sind Einfachheit, Robustheit und Hebelverhältnisse von Schubstangen- oder Hebelmechanismen grundsätzlich weiter verbesserungsfähig. Auch sollte darauf geachtet werden, dass ein Verklemmen des Fokussierantriebs wirksam verhindert werden kann. Ferner sind manche Mechaniken relativ platzgreifend.

### Allgemeine Beschreibung der Erfindung

Die Erfindung hat sich daher die Aufgabe gestellt, ein binokulares Fernglas mit einer Knickbrücke bereit zu stellen, welches einen präzisen, zuverlässigen und platzsparenden Antriebsmechanismus für die synchrone Fokussierung der beiden Fernrohre besitzt, welcher keine ungünstigen Hebelverhältnisse aufweist und bei welchem ein Verklemmen des Antriebsmechanismus wirksam vermieden werden kann.

Ein weiterer Aspekt der Aufgabe ist es, ein binokulares Fernglas mit einer Knickbrücke bereit zu stellen, dessen Antriebsmechanismus für die synchrone Fokussierung der beiden Fernrohre sich beim Schwenken oder "Knicken" der Knickbrücke nicht, insbesondere nicht relativ zueinander, verstellt.

Die Aufgabe der Erfindung wird durch den Gegenstand der unabhängigen Ansprüche gelöst. Vorteilhafte Weiterbildungen der Erfindung sind in den Unteransprüchen definiert.

Das erfindungsgemäße binokulare Fernglas weist eine Knickbrücke zur Anpassung des Okularabstandes an die Augenweite (Pupillenabstand) des Benutzers auf und umfasst ein linkes Fernrohr mit einer linken Gehäusehälfte, in welcher die optischen Elemente des linken Fernrohr beherbergt sind und ein rechtes Fernrohr mit einer rechten Gehäusehälfte, in welcher die optischen Elemente des rechten Fernrohres beherbergt sind. Das linke und das rechte Fernrohr weisen jeweils eine verstellbare Fokussierung auf, um das zu betrachtende Objekt für beide Augen scharf zu stellen.

Die Knickbrücke weist ein Gelenk auf, mittels welchem das linke und rechte Fernrohr relativ zueinander schwenkbar miteinander verbunden sind, derart dass der Benutzer durch die Schwenkbewegung (das "Knicken") der Knickbrücke den Abstand des linken und rechten Okulars des linken bzw. rechten Fernrohres an seine individuelle Augenweite anpassen kann.

Die Antriebsmechanik der Fokussierung der beiden Fernrohre weist ein Fokussiergetriebe auf, mittels welchem die Fokussierung der beiden Fernrohre synchron angetrieben wird.

Das binokulare Fernglas umfasst ein vom Benutzer manuell betätigbares gemeinsames (für beide Fernrohre) Fokussierantriebselement, mittels welchem der Benutzer das Fokussiergetriebe antreibt, welches dann wiederum die Fokussierung der beiden Fernrohre synchron antreibt. Das Fokussierantriebselement ist insbesondere ein zentraler manueller, z.B. objektivseitiger, Drehknopf.

Erfindungsgemäß umfasst das Fokussiergetriebe ein Differentialgetriebe, dessen Antriebswelle direkt oder indirekt von dem gemeinsamen Fokussierantriebselement angetrieben wird. Der erste Abtrieb des Differentialgetriebes treibt direkt oder indirekt die Fokussierung des linken Fernrohres an und der zweite Abtrieb des Differentialgetriebes treibt direkt oder indirekt die Fokussierung des rechten Fernrohres an. Mit anderen Worten wird der über den zentralen Drehknopf vom Benutzer bewirkte Antrieb vermittels des als Zahnradgetriebe ausgebildeten Differentialgetriebes auf den Fokussiermechanismus des linken und rechten Fernrohres synchron verteilt.

In vorteilhafter Weise ist dieser Antriebmechanismus für die beidseitige synchrone Fokussierung der beiden Fernrohre eines binokularen Fernglases präzise und zuverlässig. Insbesondere kann der Antriebsmechanismus leichtgängig und spielarm ausgeführt sein. Ferner können ungünstige Hebelverhältnisse und ein Verklemmen des Antriebsmechanismus wirksam vermieden werden.

Ein weiterer Vorteil ist es, dass beim Schwenken oder "Knicken" der Knickbrücke trotz der Verwendung eines als Zahnradgetriebe ausgebildeten Fokussiergetriebes sich die Fokussierung der beiden Fernrohre nicht verstellt, so dass sich weder der einmal eingestellte Dioptrienausgleich zwischen den beiden Augen des Benutzers noch die synchron eingestellte Fokussierung beider Fernrohre ungewollt verstellt. Hierzu ist die Selbsthemmung innerhalb des Antriebsmechanismus so eingestellt, dass bestimmte Zahnräder des Fokussiergetriebes beim Knicken aufeinander abrollen, ohne die Fokussierung des linken und rechten Fernrohres zu verstellen.

Das vorzugsweise als ein einziger zentraler manueller Drehknopf ausgebildete gemeinsame Fokussierantriebselement treibt direkt oder indirekt die Antriebswelle des Differentialgetriebes an, so dass durch die Drehung des einen manuellen Drehknopfes vermittels des Differentialgetriebes die Fokussierung des linken und rechten Fernrohres gemeinsam und synchron angetrieben wird.

Der Antrieb der beidseitigen Fokussierung ist also insbesondere als Mitteltrieb ausgebildet. Der manuelle Drehknopf ist dabei an der Knickbrücke zwischen dem linken und rechten Fernrohr angeordnet und die Drehachse des manuellen Drehknopfes verläuft koaxial mit der Schwenkachse des Gelenks der Knickbrücke. Dies hat den Vorteil einer symmetrischen Anordnung, welche sowohl für Linkshänder als auch für Rechtshänder eine gleich komfortable Bedienung ermöglicht.

Das Differentialgetriebe ist insbesondere als Planetenzahnradgetriebe ausgebildet und umfasst ein erstes und zweites Umlaufzahnrad und ein erstes und zweites Sonnenzahnrad, welches mit dem ersten bzw. zweiten Umlaufzahnrad in kämmendem Eingriff steht. Das erste und zweite Umlaufzahnrad werden vorzugsweise von dem zentralen Drehknopf angetrieben und der Abtrieb des ersten Sonnenzahnrades treibt die Fokussierung des linken Fernrohres und der Abtrieb des zweiten Sonnenzahnrades treibt die Fokussierung des rechten Fernrohres an. Vorzugsweise ist das Differentialgetriebe als Stirnradgetriebe ausgebildet.

Ein solches Getriebe ist von Vorteil, da es sehr zuverlässig, leichtgängig und spielarm ausgebildet werden kann und eine Verklemmung innerhalb des Zahnradgetriebes nahezu ausgeschlossen ist. Auf der anderen Seite kann ein solches Getriebe platzsparend in ohnehin vorhandene Teile der Mechanik eingebaut werden, z.B. in den Drehknopf.

Ein besonders symmetrischer und kompakter Aufbau kann erzielt werden, wenn das erste und zweite Sonnenzahnrad koaxial zueinander, koaxial zu dem Gelenk und/oder koaxial zu dem Drehknopf angeordnet sind.

Die Knickbrücke umfasst insbesondere eine quer zur optischen Achse verlaufende Querplatte, welche das linke und rechte Fernrohr, bzw. deren Gehäusehälften, miteinander verbindet. Die Querplatte ist zweiteilig ausgebildet und besteht aus einer linken und rechten Hälfte, welche mit dem Gelenk schwenkbar miteinander verbunden sind.

Die zweiteilige Querplatte bildet somit eine schwenkbare aber ansonsten stabile Verbindungsstrebe zwischen den beiden Gehäusehälften. Weitere Querplatten bzw. Knickbrücken zwischen den beiden Fernrohren sind nicht ausgeschlossen, z.B. kann eine okularseitige und eine objektivseitige Knickbrücke, beispielsweise mit Durchgriff vorhanden sein.

Weiter symmetrisch und platzsparend ist es, das Differentialgetriebe direkt an dem Gelenk der Knickbrücke bzw. direkt an der zweiteiligen Querplatte anzuordnen. Dabei kann sich zumindest eine Welle des Fokussiergetriebes koaxial durch eine Hohlwelle des Gelenks hindurch erstrecken.

Gemäß einer bevorzugten Ausführungsform der Erfindung umfasst der Antriebsmechanismus für die Fokussierung einen linken und rechten Spindeltrieb, welche direkt oder indirekt von dem zugehörigen Abtrieb des Differentialgetriebes rotatorisch angetrieben werden. Der linke und rechte Spindeltrieb setzt dann die rotatorische Bewegung des Differentialgetriebeantriebs jeweils separat in eine Linearverschiebung um. Mittels der so erzeugten Linearverschiebung wird dann von dem linken Spindeltrieb zumindest eines der optischen Elemente des linken Fernrohres und von dem rechten Spindeltrieb zumindest eines der optischen Elemente des rechten Fernrohres angetrieben, um die synchrone Fokussierung des linken und rechten Fernrohres zu bewirken.

In vorteilhafter Weise kann die relativ späte Umsetzung der über den Drehknopf erzeugten Rotationsbewegung in die Linearverschiebung für hohe Präzision und Spielarmut sorgen. Ferner können Z-förmige Schub- und Hebelstangen mit ungünstigen Hebelverhältnissen vermieden werden. Darüber hinaus kann der Spindeltrieb eine hinreichende Selbsthemmung aufweisen, die ein ungewolltes Verstellen der Fokussierung der beiden Fernrohre, auch relativ zueinander, beim Schwenken der Knickbrücke vermeidet.

Insbesondere umfasst der Spindeltrieb des linken und rechten Fernrohres eine linke bzw. rechte Gewindestange, welche sich in der Gehäusehälfte des linken bzw. rechten Fernrohres erstreckt und z.B. an der linken bzw. rechten Hälfte der Querplatte drehbar gelagert ist. Hierdurch können in vorteilhafter Weise die kompakte Bauweise, die Präzision und die Spielarmut der Fokussiermechanik weiter gefördert werden.

Gemäß einer bevorzugten Ausführungsform der Erfindung umfasst das Fokussiergetriebe ein erstes und zweites, bzw. linkes und rechtes Untersetzungsgetriebe, welches von dem ersten bzw. zweiten Abtrieb des Differentialgetriebes angetrieben wird. Vermittels des linken und rechten Untersetzungsgetriebes wird dann der linke bzw. rechte Spindeltrieb angetrieben.

Dadurch kann das Gesamtuntersetzungsverhältnis zwischen dem Drehknopf und der Linearverschiebung der Optiken angepasst werden und so eine feine und präzise Einstellung der Fokussierungen der beiden Fernrohre erzielt werden.

Vorzugsweise sind das linke und rechte Untersetzungsgetriebe lateral zueinander versetzt an der jeweiligen Hälfte der Querplatte angeordnet, was ebenfalls platzsparend ist.

Gemäß einer bevorzugten Ausführungsform der Erfindung sind der Drehknopf und das Differentialgetriebe axial, d.h. bezogen auf die Richtung der optischen Achse, auf einer ersten Seite der Knickbrücke bzw. der Querplatte, vorzugsweise objektivseitig, angeordnet. Weiter vorzugsweise sind das erste und zweite Untersetzungsgetriebe auf der axial gegenüberliegenden zweiten Seite der Knickbrücke bzw. der Querplatte, also vorzugsweise okularseitig angeordnet, so dass sich das Fokussiergetriebe jeweils teilweise auf beiden Axialseiten der Knickbrücke befindet und sich zumindest eine Welle des Fokussiergetriebes durch die Querplatte hindurch erstreckt. Auch dies kann in vorteilhafter Weise eine besonders kompakte Bauweise ermöglichen.

Vorzugsweise umfasst das erste und zweite Sonnenzahnrad eine erste bzw. zweite Abtriebswelle, wobei sich die beiden Abtriebswellen koaxial zueinander und/oder koaxial zu der Schwenkachse des Gelenks erstrecken. Insbesondere erstrecken sich die erste und zweite Abtriebswelle axial in dieselbe Richtung. Hierfür ist die eine der beiden Abtriebswellen als Hohlwelle ausgebildet und die andere der beiden Abtriebswellen verläuft koaxial in der Hohlwelle. Beide so ausgebildeten Abtriebswellen können sich dann koaxial durch das als Hohl-Gelenk ausgebildete Gelenk der Knickbrücke hindurch erstrecken. Diese Anordnung ermöglicht ebenfalls eine symmetrische und kompakte Bauweise.

Vorzugsweise ist der gemeinsame Drehknopf hutartig hohl ausgebildet und beherbergt im Inneren zumindest einen Teil des Differentialgetriebes. Bevorzugt werden die Umlaufzahnräder von einem Differentialgetriebekäfig mitgeführt, um die ebenfalls von dem Differentialgetriebekäfig beherbergten Sonnenzahnräder anzutreiben, was kompakt und zuverlässig ist.

Gemäß einer weiteren bevorzugten Ausführungsform der Erfindung ist der Drehknopf axial auf einer ersten Seite der Knickbrücke bzw. der Querplatte, vorzugsweise objektivseitig, und das Differentialgetriebe und/oder das erste und zweite Untersetzungsgetriebe sind auf der axial gegenüberliegenden zweiten Seite der Knickbrücke bzw. Querplatte, vorzugsweise okularseitig, angeordnet. Bei dieser Ausführungsform kann der Differentialgetriebekäfig innerhalb der Sonnenzahnräder angeordnet sein, was ebenfalls einen kompakten Aufbau ermöglicht.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- Fig. 1: Eine generelle schematische Darstellung eines binokularen Fernglases,
- Fig. 2: eine teilweise geöffnete Ansicht auf ein binokulares Fernglas gemäß eines ersten Ausführungsbeispiels der Erfindung,
- Fig. 3: einen schematischen Querschnitt durch das binokulare Fernglas aus Fig. 2,
- Fig. 4: eine Explosionsdarstellung des Fokussierantriebs des binokularen Fernglases aus Fig. 2 und 3,
- Fig. 5: eine Ausschnittsvergrößerung des Gelenks und Differentialantriebs aus Fig. 3,
- Fig. 6: ein weiter vergrößerter Ausschnitt der Fig. 5,
- Fig. 7: eine dreidimensionale Darstellung des Fokussiergetriebes eines binokularen Fernglases gemäß eines zweiten Ausführungsbeispiels der Erfindung,
- Fig. 8: eine Explosionsdarstellung des Differentialgetriebes aus Fig. 7,
- Fig. 9: einen Querschnitt durch das Fokussiergetriebe aus Fig. 7,
- Fig. 10: eine Ausschnittsvergrößerung aus Fig. 9

### Detaillierte Beschreibung der Erfindung

Fig. 1 zeigt eine schematische Darstellung des Grundaufbaus eines binokularen Fernglases mit Knickbrücke. Der grundsätzliche Aufbau eines binokularen Fernglases mit Knickbrücke ist bereits in der Beschreibungseinleitung erläutert, worauf hiermit Bezug genommen werden kann.

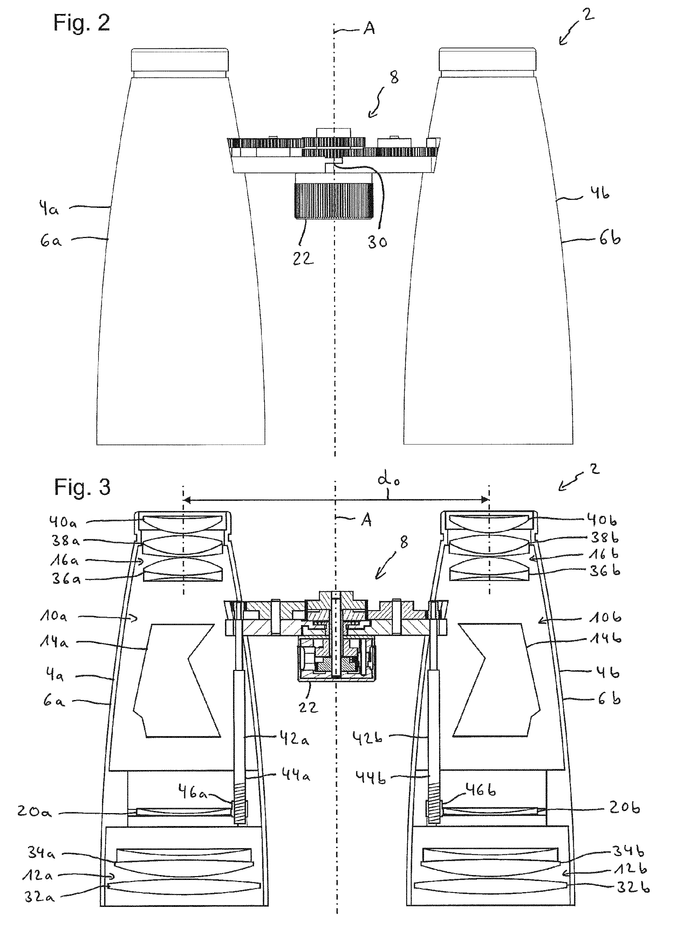

Fig. 2 zeigt ein erstes erfindungsgemäßes Ausführungsbeispiel eines binokularen Fernglases 2 mit einem linken und rechten Fernrohr 6a, 6b, umfassend eine linke und eine rechte Gehäusehälfte in Form von sogenannten Tuben 4a, 4b, welche wie in dem gezeigten Beispiel nicht zwingend zylindrisch zu sein brauchen. Die beiden Tuben 4a, 4b sind mittels einer Knickbrücke 8 mit einem schwenkbaren oder knickbaren Gelenk 30 miteinander verbunden, damit der Benutzer mittels einer Schwenkbewegung der beiden Fernrohre 6a, 6b relativ zueinander (sogenanntes Knicken) den Okularabstand d₀ individuell an die Augenweite W anpassen kann. Die Knickbrücke 8 ist in Figur 2 offen dargestellt, d.h. die Gehäuseverkleidung der Knickbrücke 8 ist ausgeblendet, um den inneren Aufbau besser erkennen zu können. Je nach Stabilitätsanforderungen und Ausführungsform des Fernglases 2 kann die Knickbrücke 8 eine mehr oder weniger größere Ausdehnung aufweisen, oder es kann z.B. noch eine weitere objektivseitige Knickbrücke vorhanden sein.

Bezug nehmend auf Fig. 3 weist jedes der beiden Fernrohre 6a, 6b ein Objektiv 12a, 12b, eine strahlabwärts des Objektivs 12a, 12b angeordnete Fokussierlinse 20a, 20b, ein strahlabwärts der Fokussierlinse 20a, 20b angeordnetes Prismensystem 14a, 14b und ein strahlabwärts des Prismensystems 14a, 14b angeordnetes Okular 16a, 16b auf. In dem dargestellten Beispiel sind die optischen Achsen des Objektivs 12a, 12b koaxial mit den optischen Achsen des Okulars 16a, 16b dargestellt, wie dies bei kleineren binokularen Ferngläsern 2 der Fall ist. Selbstverständlich kann die Erfindung auch auf binokulare Ferngläser 2 angewendet werden, welche wie in Fig. 1 dargestellt und bei größeren binokularen Ferngläsern üblich ist, einen Versatz der optischen Achsen des Okulars und des Objektivs aufweisen.

Das Objektiv 12a, 12b umfasst in dem vorliegend dargestellten Beispiel zwei feststehende Objektivlinsen 32a, 34a, 32b, 34b und das Okular 16a, 16b drei Okularlinsen 36a, 38a, 40a, 36b, 38b, 40b. Der Dioptrienausgleich kann z.B. über eine Axialverschiebung an einem der beiden Okulare 16a, 16b erfolgen (nicht dargestellt), wie dem Fachmann grundsätzlich bekannt ist.

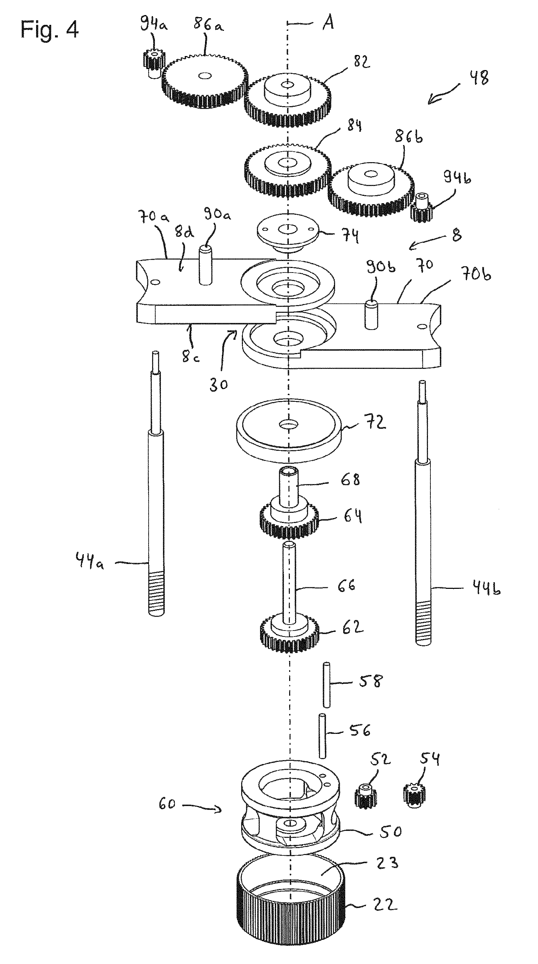

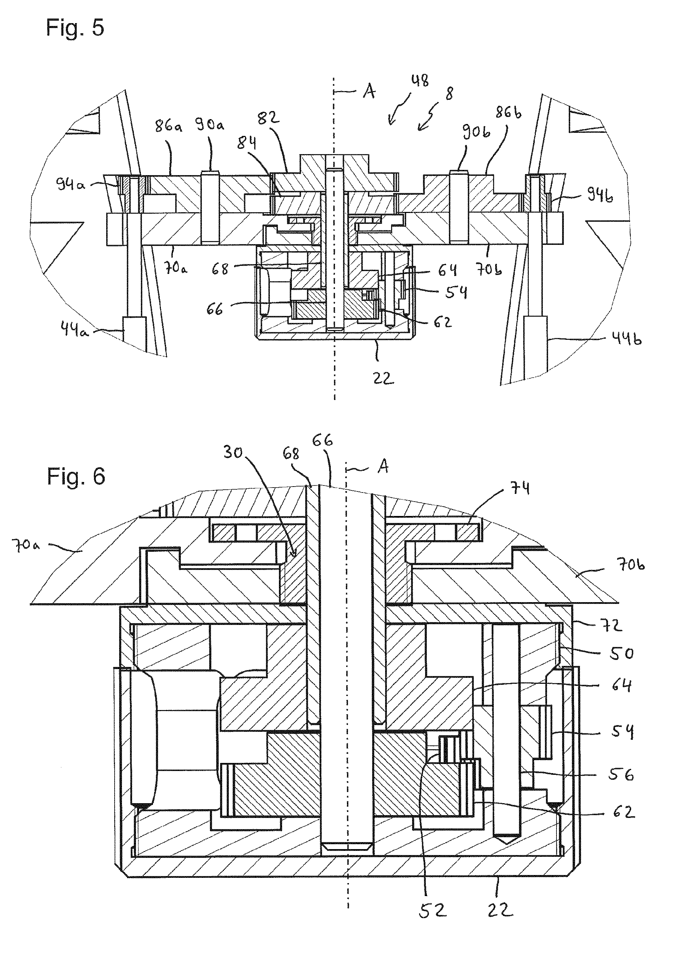

Die Fokussierlinse 20a, 20b ist entlang der optischen Achse bzw. der hierzu parallelen Zentralachse A axial verschiebbar, um die Fokussierung der beiden Fernrohre 6a, 6b zu bewirken. Im vorliegenden Beispiel erfolgt die Längsverschiebung der Fokussierlinse 20a, 20b durch einen Spindeltrieb 42a, 42b, umfassend eine als Gewindestange ausgebildete Spindel 44a, 44b, welche mit einer Linearverschiebeeinrichtung 46a, 46b mit einem komplementären Gewinde an dem zur synchronen Fokussierung jeweils axial verschieblich ausgebildeten Teil der linken und rechten Optik - in diesem Beispiel die jeweilige Fokussierlinse 20a, 20b - zusammenwirkt, dergestalt dass die Rotation der Spindel 44a, 44b in eine lineare axiale Verschiebung des beidseits axial verschieblich ausgebildeten Teils der Optik - in diesem Beispiel die jeweilige Fokussierlinse 20a, 20b - bewirkt. Dies vermeidet komplexe Schubstangen- oder Hebelsysteme mit ungünstigen Hebelverhältnissen, wie sie teilweise im Stand der Technik eingesetzt werden. Ein typischer axialer linearer Verstellweg der Fokussierlinse 20a, 20b liegt dabei in der Größenordnung von etwa 10 mm. Der rotatorische Antrieb der Spindeln 44a, 44b erfolgt über das als Zahnradgetriebe ausgebildete Fokussiergetriebe 48, welches am Besten in den Fig. 4 bis 6 zu erkennen ist.

Der Benutzer treibt durch manuelle Drehung den Drehknopf 22 an, welcher hutartig hohl ausgebildet ist. Im Innenraum 23 des Drehknopfes 22 ist ein Differentialgetriebekäfig 50 angeordnet, welches drehfest mit dem Drehknopf 22 verbunden ist, so dass durch Drehung des Drehknopfes 22 der Differentialgetriebekäfig 50 in Drehung versetzt wird. Der Differentialgetriebekäfig 50 beherbergt zwei Umlaufzahnräder 52, 54, welche mit Achsbolzen 56, 58 in dem Differentialgetriebekäfig 50 drehbar festgelegt sind, derart, dass sie von dem Differentialgetriebekäfig 50 in eine Umlaufbewegung um die zu dem Gelenk 30 koaxiale zentrale Achse A versetzt werden. Die Umlaufzahnräder 52, 54 stehen mit jeweils einem koaxial zentralen Sonnenzahnrad 62, 64 in kämmendem Eingriff und rollen auf diesen ab, wodurch die Sonnenzahnräder 62, 64 in Drehung versetzt werden. Das drehknopfabgewandte Sonnenzahnrad 64 besitzt eine Hohlwelle 68, in welcher sich die Welle 66 des dem Drehknopf 22 zugewandten Sonnenzahnrades 62 koaxial erstreckt.

Die Knickbrücke 8 umfasst eine Querplatte 70, welche aus einer linken und rechten Hälfte 70a, 70b, besteht, die mit zentralen Gelenkelementen 72, 74 das Schwenk- oder Knickgelenk 30 der Knickbrücke 8 bilden. Hiermit sind die beiden Hälften 70a, 70b der Querplatte 70 an welchen wiederum die beiden Tuben 4a, 4b aufgehängt sind, um die zentrale Achse A schwenkbar bzw. knickbar gelagert, wie dem Fachmann grundsätzlich bekannt ist.

Das Gelenk 30 ist im vorliegenden Beispiel als Hohlgelenk ausgebildet, so dass sich die beiden Wellen 66, 68 der beiden Sonnenzahnräder 62, 64 koaxial durch das Gelenk 30 hindurch erstrecken können. Somit ist in diesem Beispiel das als Differentialzahnradgetriebe ausgebildete Differentialgetriebe 60 auf der Objektivseite 8c der Knickbrücke 8 angeordnet und weitere Teile des Fokussiergetriebes 48 sind auf der Okularseite 8d der Knickbrücke 8 angeordnet. Auf der Okularseite 8d sind zwei koaxiale zentrale Zwischenzahnräder 82, 84 drehfest mit den Abtriebswellen 66, 68 der Sonnenzahnräder 62, 64 verbunden. Die koaxialen zentralen Zwischenzahnräder 82, 84 stehen in kämmendem Eingriff mit jeweils lateral versetzten Transfer-Zahnrädern 86a, 86b, welche auf Achsbolzen 90a, 90b der jeweiligen Querplattenhälften 70a, 70b gelagert sind. Die lateral versetzten Transfer-Zahnräder 86a, 86b stehen wiederum in kämmendem Eingriff mit kleinen äußeren Zahnrädern 94a, 94b, so dass ein Untersetzungsgetriebe, im vorliegenden Beispiel etwa 4,5:1, gebildet wird.

Die äußeren Zahnräder 94a, 94b sind mit den Spindeln 44a, 44b drehfest verbunden, so dass hiermit die Spindeln 44a, 44b rotatorisch angetrieben werden, und zwar synchron durch Drehung des einen (einzigen) Drehknopfes 22 vermittels des vorstehend beschriebenen Fokussiergetriebes 48. Die Rotation der Spindeln 44a, 44b wird dann wie am besten in Fig. 3 zu sehen ist, für jedes Fernrohr 6a, 6b jeweils separat erst an dem axial verschieblich ausgebildeten Teil der Optik - in diesem Beispiel an der Fokussierlinse 20a, 20b - in die gewünschte axiale Linearverschiebung umgesetzt. Die Verwendung jeweils eines separaten Spindeltriebs oder Spindelantriebs 42a, 42b für jedes der beiden Fernrohre 6a, 6b hat sich als sehr zuverlässig und spielarm erwiesen. Die Selbsthemmung der beiden Spindeltriebe 42a, 42b, kann groß genug eingestellt werden, dass das Differentialgetriebe 60 bei Drehung des Drehknopfes 22 beide Fokussierlinsen 20a, 20b zuverlässig synchron antreibt. Je nach Bauart des binokularen Fernglases 2 kann der beidseits synchrone Spindeltrieb 42a, 42b, angetrieben über das Differentialgetriebe 60 selbstverständlich auch ein anderes axial verschieblich ausgebildetes Element der Optik, z.B. eine andere zum Objektiv 12a, 12b gehörende Linse axial linear verschieben.

Zusammenfassend fasst das als Drehknopf ausgebildete Antriebs- oder Fokussierrad 22 den Differentialgetriebekäfig 50, der wiederum die beiden gegenläufigen Umlauf- oder Planetenzahnräder 52, 54 fasst. Wenn der Benutzer an dem Drehknopf 22 dreht und damit den Differentialgetriebekäfig 50 dreht, blockieren sich die gegenläufigen Umlaufzahnräder 52, 54 selbst und übertragen die Drehbewegung auf die beiden Sonnenzahnräder 62, 64, die jeweils die Drehung über die zentralen Zwischenzahnräder 82, 84 und das Zahnraduntersetzungsgetriebe 86a, 86b, 94a, 94b synchron auf die beiden als Gewindestangen ausgebildete Spindeln 44a, 44b übertragen. Dieses Prinzip funktioniert, solange die Drehmomente in etwa gleich sind. Wird jetzt die Knickbrücke 8 zum Ändern des Okularabstandes d₀ geknickt, rollen die beiden Umlaufzahnräder 52, 54 auf den Sonnenzahnrädern 62, 64 ab und gleichen so die Umfangsunterschiede der Zahnräder aus. Der Fokussierantrieb der vorliegenden Erfindung überträgt den vom Benutzer mittels des Drehknopfes 22 initiierten Antrieb somit bis zu der linken und rechten Spindel 44a, 44b mittels Zahnrädern durch Rotation, so dass ungünstige Hebelverhältnisse und Verklemmgefahren von komplexen Schubstangen- oder Hebelsystemen vermieden werden können.

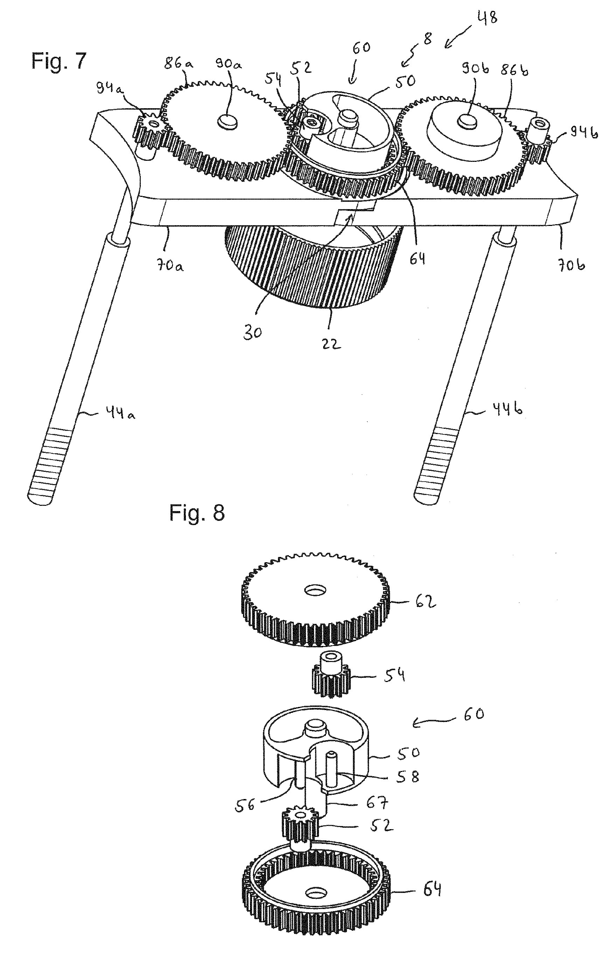

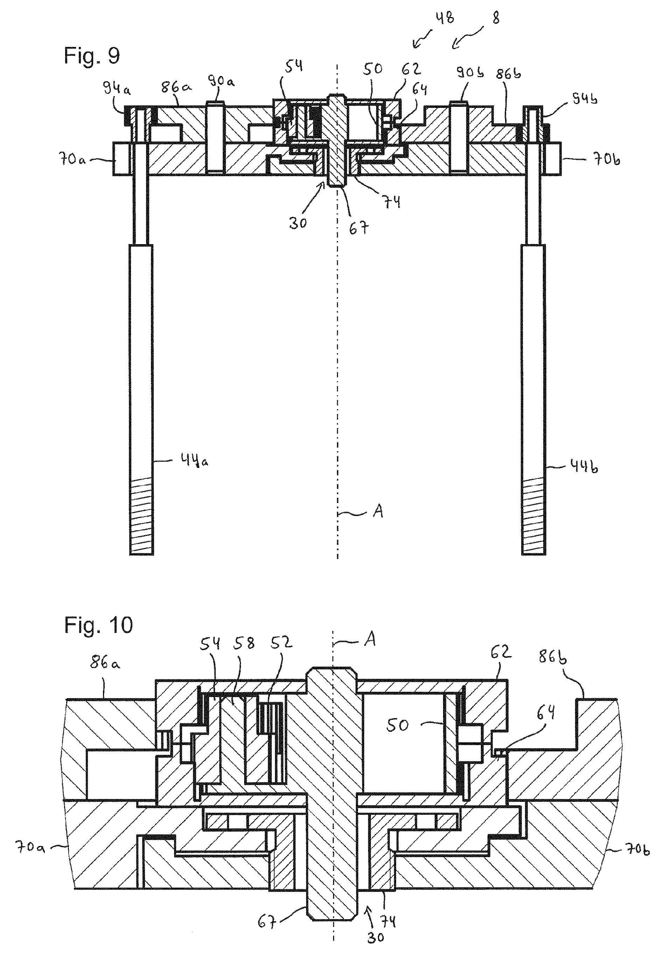

Die Fig. 7-10 zeigen ein zweites Ausführungsbeispiel Planeten-Differentialgetriebes 60. Bei dieser Ausführungsform ist der Drehknopf 22 ebenfalls objektivseitig angeordnet und überträgt die Drehbewegung über eine sich durch das Gelenk 30 koaxial erstreckende Welle 67 auf den Differentialgetriebekäfig 50, welcher demnach bei dieser Ausführungsform auf der dem Drehknopf 22 gegenüberliegenden - in diesem Beispiel okularseitigen - Seite 8d der Knickbrücke 8 angeordnet ist. Das Differentialzahnradgetriebe 60 umfasst zwei innen- und außenverzahnte Sonnenzahnräder 62, 64, deren Innenverzahnung mit den Planeten- oder Umlaufzahnrädern 52, 54 in kämmenden Eingriff stehen. Die Umlaufzahnräder 52, 54 werden über Achsbolzen 56, 58 von dem Differentialgetriebekäfig 50 um die zentrale Achse A mitgenommen und treiben so die beiden Sonnenzahnräder 62, 64 auf der Okularseite 8d der Knickbrücke 8 an. Die beiden Sonnenzahnräder 62, 64 stehen nun bei diesem Ausführungsbeispiel direkt in jeweils kämmenden Eingriff mit den lateral und axial versetzten Transfer-Zahnrädern 86a, 86b, welche wiederum mit den an den Spindeln 44a, 44b befestigten äußeren Zahnrädern 94a, 94b in kämmendem Eingriff stehen. Dieses Zahnradgetriebe kann bei bestimmten Ausführungsformen von binokularen Ferngläsern 2 ggf. noch kompakter gebaut werden, als dasjenige in Fig. 2 bis 6, insbesondere entfallen die separaten koaxialen Zwischenzahnräder 82, 84 bzw. diese werden von den innen und außen verzahnten Sonnenzahnrädern 62, 64 ersetzt.

Bei beiden Ausführungsbeispielen sind die Spindeln 44a, 44b in der Querplatte 70, bzw. jeweils in der zugehörigen Hälfte 70a, 70b der Querplatte 70 drehbar gelagert und zwar beidseits lateral versetzt der zentralen Achse A des Gelenks 30. Bei dem dargestellten Ausführungsbeispiel erstrecken sich die Spindeln 44a, 44b innerhalb des zugehörigen Fernrohrgehäuses 4a, 4b.

Bei beiden Ausführungsbeispielen ist das Differentialzahnradgetriebe 60 als Stirnrad-Planetendifferentialgetriebe ausgebildet, was eine kompakte Bauweise ermöglicht. Die Reibmomente der Spindeln 44a, 44b und die Reibmomente des Zahnradgetriebes sind so eingestellt, dass die Reibmomente der Spindeln 44a, 44b größer sind, als die Reibmomente des Differentialzahnradgetriebes 60, so dass sich die Spindeln 44a, 44b beim Schwenken oder Knicken der Knickbrücke 8 nicht drehen, sondern die Umlaufzahnräder 52, 54 auf den Sonnenzahnrädern 62, 64 abrollen, damit sich die Fokussierung beim Knicken der Knickbrücke 8 nicht ungewollt verstellt.

Um die entsprechenden Reibwerte innerhalb des Fokussiergetriebes 48 sicherstellen zu können, kann bei der ersten Ausführungsform in Fig. 4 bis 6 noch eine Reibscheibe (nicht dargestellt) zwischen den beiden koaxialen Zwischenzahnrädern 82, 84 angeordnet sein.

Die beschriebenen Getriebeformen weisen in vorteilhafter Weise einen flachen Aufbau auf und können somit auch bei binokularen Ferngläsern 2 mit sogenanntem Durchgriff, d.h. mit frei zugänglichem Drehknopf 22 zwischen den beiden Gehäusehälften oder Tuben 4a, 4b angeordnet werden, insbesondere bei objektivseitigem Drehknopf 22, wie bei den hiesigen Ausführungsbeispielen. Ferner ist von Vorteil, dass das flach aufgebaute Zahnradgetriebe sogar in einer flachen Knickbrücke 8 integriert werden kann, was auch dort eine spielarme Ausführung ermöglicht.

Zusammenfassend umfasst das Fokussiergetriebe 48 einen als Zahnradgetriebe ausgebildeten ersten gemeinsamen zentralen Teil 50-84 und einen ebenfalls als Zahnradgetriebe ausgebildeten zweiten Teil 86a, 86b, 94a, 94b, wobei der zweite Teil 86a, 86b, 94a, 94b in eine erste Hälfte 86a, 94a und eine zweite Hälfte 86b, 94b aufgeteilt ist, welche dem linken bzw. rechten Fernrohr 6a, 6b zugeordnet ist. Mit anderen Worten spaltet sich der Fokussierantrieb noch innerhalb des Zahnradgetriebes 50-94b auf die beiden Fernrohre 6a, 6b auf. Der über den Drehknopf 22 ausgeübte rotatorische Antrieb wird also vermittels des Differentialzahnradgetriebes 60 auf die linke Hälfte 86a, 94a und die rechte Hälfte 86b, 94b des zweiten Teils des Zahnradgetriebes aufgeteilt und von diesen bis zu dem jeweils zugehörigen linken bzw. rechten Spindeltrieb 42a, 42b für beide Hälften separat rotatorisch weiter vermittelt.

Damit ermöglicht die vorliegende Erfindung eine vorteilhafte Kombination aus Mitteltrieb für die Fokussierung und einem möglichst weit bis zu dem durch axiale Linearverschiebung synchron fokussierenden Teil der Optik reichenden rotatorischen Antrieb mittels Zahnrädern.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann, ohne den Schutzbereich der Ansprüche zu verlassen. Ferner ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind.

### Bezugszeichenliste

- 2: binokulares Fernglas
- 4a, 4b: Gehäusehälften
- 6a, 6b: linkes und rechtes Fernrohr
- 8: Knickbrücke
- 8c: Objektivseite der Knickbrücke
- 8d: Okularseite der Knickbrücke
- 10a, 10b: optische Systeme
- 12a, 12b: Objektive
- 13a, 13b: Feldblenden
- 14a, 14b: Prismensysteme
- 16a, 16b: Okulare
- 18: Objekt
- 20a, 20b: Fokussierlinsen
- 22: Drehknopf
- 23: Innenraum
- 24a, 24b: Augen
- 25a, 25b: Augenpupillen
- 26a, 26b: optische Achsen der Objektive
- 28a, 28b: optische Achsen der Okulare
- 30: Gelenk
- 32a, 32b: festststehende Objektivlinsen
- 34a, 34b: festststehende Objektivlinsen
- 36a, 36b: Okularlinsen
- 38a, 38b: Okularlinsen
- 40a, 40b: Okularlinsen
- 42a, 42b: Spindeltriebe
- 44a, 44b: Spindeln
- 46a, 46b: Linearverschiebeeinrichtungen
- 48: Fokussiergetriebe
- 50: Differentialgetriebekäfig
- 52, 54: Umlaufzahnräder
- 56, 58: Achsbolzen
- 60: Differentialgetriebe
- 62, 64: Sonnenzahnräder
- 66, 67, 68: Wellen
- 70: Querplatte
- 70a, 70b: Querplattenhälften
- 72, 74: zentrale Gelenkelemente
- 82, 84: koaxiale zentrale Zwischenzahnräder
- 86a, 86b: Transfer-Zahnräder
- 90a, 90b: Achsbolzen
- 94a, 94b: äußere Zahnräder

## Patentansprüche

1. Binokulares Fernglas (2) mit Knickbrücke (8) zur Anpassung des Okularabstandes (d₀) an die Augenweite (W) des Benutzers, umfassend
ein linkes Fernrohr (6a) mit optischen Elementen (12a, 14a, 16a, 20a) mit verstellbarer Fokussierung für das linke Auge (24a) des Benutzers,
ein rechtes Fernrohr (6b) mit optischen Elementen (12b, 14b, 16b, 20b) mit verstellbarer Fokussierung für das rechte Auge (24b) des Benutzers,
eine Knickbrücke (8) mit einem Gelenk (30), mittels welchem das linke und rechte Fernrohr (6a, 6b) schwenkbar miteinander verbunden sind, um durch die Schwenkbewegung der Knickbrücke (8) den Abstand des linken und rechten Fernrohres (6a, 6b) an die individuelle Augenweite (W) des Benutzers anzupassen,
ein Fokussiergetriebe (48) zum synchronen Fokussieren des linken und rechten Fernrohres (6a, 6b),
ein vom Benutzer betätigbares gemeinsames Fokussierantriebselement (22) zum Antreiben des Fokussiergetriebes (48), um vermittels des Fokussiergetriebes (48) die Fokussierung des linken und rechten Fernrohres (6a, 6b) anzutreiben,
**dadurch gekennzeichnet, dass**
das Fokussiergetriebe (48) ein Differentialgetriebe (60) umfasst.

2. Binokulares Fernglas (2) nach Anspruch 1,
wobei das gemeinsame Fokussierantriebselement (22) als manueller Drehknopf ausgebildet ist, welcher direkt oder indirekt das Differentialgetriebe (60) antreibt, so dass durch die Drehung des Drehknopfs und vermittels des Differentialgetriebes (60) die Fokussierung des linken und rechten Fernrohres (6a, 6b) gemeinsam und synchron angetrieben wird.

3. Binokulares Fernglas (2) nach einem der vorstehenden Ansprüche, wobei das gemeinsame Fokussierantriebselement (22) zwischen dem linken und rechten Fernrohr (6a, 6b) an der Knickbrücke (8) angeordnet ist und die Drehachse des gemeinsamen Fokussierantriebselements (22) koaxial mit der Schwenkachse (A) des Gelenks (30) der Knickbrücke (8) verläuft.

4. Binokulares Fernglas (2) nach einem der vorstehenden Ansprüche, wobei das Differentialgetriebe (60) als Planetenzahnradgetriebe ausgebildet ist und ein erstes und zweites Umlaufzahnrad (52, 54) und ein erstes und zweites Sonnenzahnrad (62, 64) umfasst, welches mit dem ersten bzw. zweiten Umlaufzahnrad (52, 54) in kämmendem Eingriff steht, wobei das erste und zweite Umlaufzahnrad (52, 54) von dem gemeinsamen Fokussierantriebselement (22) angetrieben werden und der Abtrieb des ersten Sonnenzahnrades (62) die Fokussierung des linken Fernrohres (6a) und der Abtrieb des zweiten Sonnenzahnrades (64) die Fokussierung des rechten Fernrohres (6b) antreibt.

5. Binokulares Fernglas (2) nach Anspruch 4,
wobei das erste und zweite Sonnenzahnrad (62, 64) koaxial zueinander und/oder koaxial zu dem Gelenk (30) angeordnet sind.

6. Binokulares Fernglas (2) nach einem der vorstehenden Ansprüche, wobei die Knickbrücke (8) eine Querplatte (70) umfasst, welche das linke und rechte Fernrohr (6a, 6b) miteinander verbindet, wobei die Querplatte (70) zweiteilig ausgebildet ist und eine linke und eine rechte Hälfte (70a, 70b) umfasst, welche mit dem Gelenk (30) schwenkbar miteinander verbunden sind.

7. Binokulares Fernglas (2) nach einem der vorstehenden Ansprüche, wobei das Differentialgetriebe (60) an dem Gelenk (30) angeordnet ist und das Gelenk (30) eine Hohlwelle aufweist und sich zumindest eine Welle (66, 67, 68) des Fokussiergetriebes (48) koaxial durch die Hohlwelle des Gelenks (30) erstreckt.

8. Binokulares Fernglas (2) nach einem der vorstehenden Ansprüche, wobei ein linker und rechter Spindeltrieb (42a, 44a) umfasst ist, um die Fokussierung des linken bzw. rechten Fernrohres (6a, 6b) zu bewirken, derart dass der linke und rechte Spindeltrieb (42a, 42b) von dem Fokussiergetriebe (48) jeweils rotatorisch angetrieben wird und der linke Spindeltrieb (42a) die Rotationsbewegung in eine lineare Verschiebung zumindest eines der optischen Elemente (12a, 16a, 20a) des linken Fernrohres (6a) und der rechte Spindeltrieb (42b) die Rotationsbewegung in eine lineare Verschiebung zumindest eines der optischen Elemente (12b, 16b, 20b) des rechten Fernrohres (6b) umsetzt.

9. Binokulares Fernglas (2) nach Anspruch 8,
wobei der Spindeltrieb (42a, 42b) des linken und rechten Fernrohres eine linke bzw. rechte Spindel (44a, 44b) umfasst, wobei sich die linke und rechte Spindel (44a, 44b) in der Gehäusehälfte (4a, 4b) des linken bzw. rechten Fernrohres (6a, 6b) erstreckt und an der linken bzw. rechten Hälfte (70a, 70b) der Querplatte (70) drehbar gelagert ist.

10. Binokulares Fernglas (2) nach Anspruch 9,
wobei das Fokussiergetriebe (48) ein erstes und zweites Untersetzungsgetriebe (86a, 94a, 86b, 94b) umfasst, welches von dem ersten bzw. zweiten Abtrieb des Differentialgetriebes (60) angetrieben wird und der linke und rechte Spindeltrieb (42a, 42b) vermittels des ersten bzw. zweiten Untersetzungsgetriebes (86a, 94a, 86b, 94b) angetrieben wird.

11. Binokulares Fernglas (2) nach einem der vorstehenden Ansprüche, wobei das gemeinsame Fokussierantriebselement (22) und das Differentialgetriebe (60) axial auf einer ersten Seite (8c) der Knickbrücke (8) und/oder das erste und zweite Untersetzungsgetriebe (86a, 94a, 86b, 94b) auf der axial gegenüberliegenden zweiten Seite (8d) der Knickbrücke (8) angeordnet sind.

12. Binokulares Fernglas (2) nach einem der vorstehenden Ansprüche, wobei das erste und zweite Sonnenzahnrad (62, 64) eine erste bzw. zweite Abtriebswelle (66, 68) umfasst und sich die erste und/oder zweite Abtriebswelle (66, 68) koaxial zu der Schwenkachse (A) des Gelenks (30) erstrecken.

13. Binokulares Fernglas (2) nach Anspruch 12,
wobei sich die erste und zweite Abtriebswelle (66, 68) axial in dieselbe Richtung erstrecken, wobei eine der ersten und zweiten Abtriebswellen (66, 68) als Hohlwelle (68) ausgebildet ist und die andere (66) der ersten und zweiten Abtriebswellen (66, 68) koaxial in der Hohlwelle (68) verläuft.

14. Binokulares Fernglas (2) nach einem der vorstehenden Ansprüche, wobei ein Differentialgetriebekäfig (50) des Differentialgetriebes (60) von dem gemeinsamen Fokussierantriebselement (22) beherbergt ist.

15. Binokulares Fernglas (2) nach einem der vorstehenden Ansprüche, wobei das gemeinsame Fokussierantriebselement (22) axial auf einer ersten Seite (8c) der Knickbrücke (8) und das Differentialgetriebe (60) und/oder das erste und zweite Untersetzungsgetriebe (86a, 94a, 86b, 94b) auf der axial gegenüberliegenden zweiten Seite (8d) der Knickbrücke (8) angeordnet sind.

## Claims

1. Binoculars (2) with a folding bridge (8) for adapting the distance (d₀) between the eyepieces to the distance (W) between the eyes of the user, comprising
a left-hand telescope (6a)_with optical elements (12a, 14a, 16a, 20a) with adjustable focusing for the left-hand eye (24a) of the user,
a right-hand telescope (6b) with optical elements (12b, 14b, 16b, 20b) with adjustable focusing for the right-hand eye (24b) of the user,
a folding bridge (8) with a joint (30) by means of which the left-hand and right-hand telescopes (6a, 6b) are connected pivotably to each other, in order to use the pivoting movement of the folding bridge (8) to adapt the distance between the left-hand and right-hand telescopes (6a, 6b) to the individual distance (W) between the eyes of the user,
a focusing gear mechanism (48) for synchronous focusing of the left-hand and right-hand telescopes (6a, 6b),
a common focusing drive element (22) which can be actuated by the user and drives the focusing gear mechanism (48), in order to drive the focusing of the left-hand and right-hand telescopes (6a, 6b) by means of the focusing gear mechanism (48),
**characterized in that** the focusing gear mechanism (48) comprises a differential gear mechanism (60).

2. Binoculars (2) according to Claim 1, wherein the common focusing drive element (22) is designed as a manual rotary knob which drives the differential gear mechanism (60) directly or indirectly such that, by turning the rotary knob, and by means of the differential gear mechanism (60), the focusing of the left-hand and right-hand telescopes (6a, 6b) is driven jointly and synchronously.

3. Binoculars (2) according to one of the preceding claims, wherein the common focusing drive element (22) is arranged on the folding bridge (8) between the left-hand and right-hand telescopes (6a, 6b), and the rotational axis of the common focusing drive element (22) runs coaxially with respect to the pivot axis (A) of the joint (30) of the folding bridge (8).

4. Binoculars (2) according to one of the preceding claims, wherein the differential gear mechanism (60) is designed as a planetary gear mechanism and comprises a first and a second rotating gearwheel (52, 54) and a first and a second sun gearwheel (62, 64) which are in meshing engagement with the first and second rotating gearwheels (52, 54), respectively, wherein the first and second rotating gearwheels (52, 54) are driven by the common focusing drive element (22), and the output of the first sun gearwheel (62) drives the focusing of the left-hand telescope (6a), and the output of the second sun gearwheel (64) drives the focusing of the right-hand telescope (6b).

5. Binoculars (2) according to Claim 4, wherein the first and second sun gearwheels (62, 64) are arranged coaxially with respect to each other and/or coaxially with respect to the joint (30).

6. Binoculars (2) according to one of the preceding claims, wherein the folding bridge (8) comprises a transverse plate (70) which connects the left-hand and right-hand telescopes (6a, 6b) to each other, wherein the transverse plate (70) is designed in two parts and comprises a left-hand and a right-hand half (70a, 70b) which are connected pivotably to each other via the joint (30).

7. Binoculars (2) according to one of the preceding claims, wherein the differential gear mechanism (60) is arranged on the joint (30), and the joint (30) has a hollow shaft, and at least one shaft (66, 67, 68) of the focusing gear mechanism (48) extends coaxially through the hollow shaft of the joint (30).

8. Binoculars (2) according to one of the preceding claims, wherein a left-hand and a right-hand spindle drive (42a, 44a) are provided for focusing the left-hand and right-hand telescopes (6a, 6b), respectively, in such a way that the left-hand and right-hand spindle drives (42a, 42b) are each driven in rotation by the focusing gear mechanism (48), and the left-hand spindle drive (42a) converts the rotational movement into a linear displacement of at least one of the optical elements (12a, 16a, 20a) of the left-hand telescope (6a), and the right-hand spindle drive (42b) converts the rotational movement into a linear displacement of at least one of the optical elements (12b, 16b, 20b) of the right-hand telescope (6b).

9. Binoculars (2) according to Claim 8, wherein the spindle drives (42a, 42b) of the left-hand and right-hand telescopes, respectively, comprise a left-hand and a right-hand spindle (44a, 44b), wherein the left-hand and right-hand spindles (44a, 44b) extend in the housing half (4a, 4b) of the left-hand and right-hand telescope (6a, 6b), respectively, and are mounted rotatably on the left-hand and right-hand halves (70a, 70b), respectively, of the transverse plate (70).

10. Binoculars (2) according to Claim 9, wherein the focusing gear mechanism (48) comprises first and second reduction gears (86a, 94a, 86b, 94b) which are driven respectively by the first and second outputs of the differential gear mechanism (60), and the left-hand and right-hand spindle drives (42a, 42b) are driven, respectively, by means of the first and second reduction gears (86a, 94a, 86b, 94b).

11. Binoculars (2) according to one of the preceding claims, wherein the common focusing drive element (22) and the differential gear mechanism (60) are arranged axially on a first side (8c) of the folding bridge (8) and/or the first and second reduction gears (86a, 94a, 86b, 94b) are arranged on the axially opposite second side (8d) of the folding bridge (8).

12. Binoculars (2) according to one of the preceding claims, wherein the first and second sun gearwheels (62, 64) comprise first and second output shafts (66, 68), respectively, and the first and/or second output shafts (66, 68) extend coaxially with respect to the pivot axis (A) of the joint (30).

13. Binoculars (2) according to Claim 12, wherein the first and second output shafts (66, 68) extend axially in the same direction, wherein one of the first and second output shafts (66, 68) is designed as a hollow shaft (68), and the other (66) of the first and second output shafts (66, 68) runs coaxially in the hollow shaft (68).

14. Binoculars (2) according to one of the preceding claims, wherein a differential gear mechanism cage (50) of the differential gear mechanism (60) is housed by the common focusing drive element (22).

15. Binoculars (2) as claimed in one of the preceding claims, wherein the common focusing drive element (22) is arranged axially on a first side (8c) of the folding bridge (8), and the differential gear mechanism (60) and/or the first and second reduction gears (86a, 94a, 86b, 94b) are arranged on the axially opposite second side (8d) of the folding bridge (8).

## Revendications

1. Jumelles binoculaires (2) comportant un pont articulé (8) destiné à adapter l'espace entre les oculaires (d₀) à l'écartement interoculaire (W) de l'utilisateur, comprenant :
une lunette gauche (6a) comportant des éléments optiques (12a, 14a, 16a, 20a) à mise au point réglable pour l'oeil gauche (24a) de l'utilisateur,
une lunette droite (6b) comportant des éléments optiques (12b, 14b, 16b, 20b) à mise au point réglable pour l'oeil droit (24b) de l'utilisateur,
un pont articulé (8) comportant une articulation (30) au moyen de laquelle les lunettes gauche et droite (6a, 6b) sont reliées l'une à l'autre de manière pivotante afin d'adapter la distance des lunettes gauche et droite (6a, 6b) à l'écartement interoculaire individuel (W) de l'utilisateur au moyen du mouvement de pivotement du pont articulé (8),
un engrenage de mise au point (48) destiné à mettre au point de manière synchrone les lunettes gauche et droite (6a, 6b),
un élément d'entraînement de mise au point commun (22) pouvant être actionné par l'utilisateur pour entraîner l'engrenage de mise au point (48) afin d'entraîner la mise au point des lunettes gauche et droite (6a, 6b) au moyen de l'engrenage de mise au point (48),
**caractérisé en ce que** l'engrenage de mise au point (48) comprend un engrenage différentiel (60).

2. Jumelles binoculaires (2) selon la revendication 1, dans lesquelles l'élément d'entraînement de mise au point commun (22) est réalisé sous la forme d'un bouton tournant manuel qui entraîne directement ou indirectement l'engrenage différentiel (60) de manière à ce que la mise au point des lunettes gauche et droite (6a, 6b) soit entraînée en commun et de manière synchrone du fait par mise en rotation du bouton tournant et au moyen de l'engrenage différentiel (60).

3. Jumelles binoculaires (2) selon l'une quelconque des revendications précédentes, dans lesquelles l'élément d'entraînement de mise au point commun (22) est disposé entre les lunettes gauche et droite (6a, 6b) sur le pont articulé (8) et en ce que l'axe de rotation de l'élément d'entraînement de mise au point commun (22) s'étend coaxialement par rapport à l'axe de pivotement (A) de l'articulation (30) du pont articulé (8).

4. Jumelles binoculaires (2) selon l'une quelconque des revendications précédentes, dans lesquelles l'engrenage différentiel (60) est réalisé sous la forme d'un engrenage à roue planétaire et comprend des première et seconde couronnes tournantes (52, 54) et des première et seconde couronnes solaires (62, 64) qui sont engrenées avec la première ou la seconde couronne tournante (52, 54), dans lesquelles les première et seconde couronnes tournantes (52, 54) sont entraînées par l'élément d'entraînement de mise au point commun (22) et l'entraînement de la première couronne solaire (62) entraîne la mise au point de la lunette gauche (6a) et l'entraînement de la seconde couronne solaire (64) entraîne la mise au point de la lunette droite (6b).

5. Jumelles binoculaires (2) selon la revendication 4, dans lesquelles les première et seconde couronnes solaires (62, 64) sont disposées coaxialement l'une par rapport à l'autre et/ou coaxialement par rapport à l'articulation (30).

6. Jumelles binoculaires (2) selon l'une quelconque des revendications précédentes, dans lesquelles le pont articulé (8) comprend une plaque transversale (70) qui relie l'une à l'autre les lunettes gauche et droite (6a, 6b), dans lesquelles la plaque transversale (70) est constituée de deux parties et comprend des moitiés gauche et droite (70a, 70b) qui sont reliées l'une à l'autre de manière pivotante par l'intermédiaire de l'articulation (30).

7. Jumelles binoculaires (2) selon l'une quelconque des revendications précédentes, dans lesquelles l'engrenage différentiel (60) est disposé sur l'articulation (30) et l'articulation (30) comporte un arbre creux et au moins un arbre (66, 67, 68) de l'engrenage de mise au point (48) s'étend coaxialement à travers l'arbre creux de l'articulation (30).

8. Jumelles binoculaires (2) selon l'une quelconque des revendications précédentes, dans lesquelles il est prévu des actionneurs à vis gauche et droit (42a, 44a) destinés à effectuer la mise au point des lunettes gauche et droite (6a, 6b) de manière à ce que les actionneurs à vis gauche et droit (42a, 42b) soient respectivement entraînés en rotation par l'engrenage de mise au point (48), à ce que l'actionneur à vis gauche (42a) convertisse le mouvement de rotation en un déplacement linéaire d'au moins l'un des éléments optiques (12a, 16a, 20a) de la lunette gauche (6a) et à ce que l'actionneur à vis droit (42b) convertisse le mouvement de rotation en un déplacement linéaire d'au moins l'un des éléments optiques (12b, 16b, 20b) de la lunette droite (6b).

9. Jumelles binoculaires (2) selon la revendication 8, dans lesquelles l'actionneur à vis (42a, 42b) des lunettes gauche et droite comprend une vis gauche ou droite (44a, 44b), dans lequel les vis gauche et droite (44a, 44b) s'étendent dans la moitié de boîtier (4a, 4b) de la lunette gauche ou droite (6a, 6b) et est monté tournant sur la moitié gauche ou droite (70a, 70b) de la plaque transversale (70).

10. Jumelles binoculaires (2) selon la revendication 9, dans lesquelles l'engrenage de mise au point (48) comprend des premier et second engrenages réducteurs (86a, 94a, 86b, 94b) qui sont entraînés par le premier ou second entraînement de l'engrenage différentiel (60) et dans lequel les actionneurs à vis gauche et droit (42a, 42b) sont entraînés au moyen du premier ou second engrenage réducteur (86a, 94a, 86b, 94b).

11. Jumelles binoculaires (2) selon l'une quelconque des revendications précédentes, dans lesquelles l'élément d'entraînement de mise au point commun (22) et l'engrenage différentiel (60) sont disposés axialement sur un premier côté (8c) du pont articulé (8) et/ou les premier et second engrenages réducteurs (86a, 94a, 86b, 94b) sont disposés sur le second côté axialement opposé (8d) du pont articulé (8).

12. Jumelles binoculaires (2) selon l'une quelconque des revendications précédentes, dans lesquelles les première et seconde couronnes solaires (62, 64) comprennent un premier ou un second arbre de sortie (66, 68) et les premier et/ou second arbres de sortie (66, 68) s'étendent coaxialement par rapport à l'axe de pivotement (A) de l'articulation (30).

13. Jumelles binoculaires (2) selon la revendication 12, dans lesquelles les premier et second arbres de sortie (66, 68) s'étendent dans la même direction axiale, dans lesquelles l'un des premier et second arbres de sortie (66, 68) sont réalisés sous la forme d'arbres creux (68) et l'autre (66) des premier et second arbres de sortie (66, 68) s'étend coaxialement dans l'arbre creux (68).

14. Jumelles binoculaires (2) selon l'une quelconque des revendications précédentes, dans lesquelles une cage d'engrenage différentiel (50) de l'engrenage différentiel (60) est abritée par l'élément d'entraînement de mise au point commun (22).

15. Jumelles binoculaires (2) selon l'une quelconque des revendications précédentes, dans lesquelles l'élément d'entraînement de mise au point commun (22) est disposé axialement sur un premier côté (8c) du pont articulé (8) et l'engrenage différentiel (60) et/ou les premier et second engrenages réducteurs (86a, 94a, 86b, 94b) sont disposés sur le second côté axialement opposé (8d) du pont articulé (8).
